# EUROPEAN PATENT APPLICATION

(11) **EP 2 634 693 A1**
(43) Date of publication of application: **04.09.2013**
(21) Application number: 12001326.3
(22) Date of filing: 28.02.2012
(51) Int. Cl.: G06F 9/455

(54) **Method and apparatus for interacting with runnung software**

(71) Applicant: MIMOON GmbH, 47057 Duisburg (DE)
(72) Inventor: Hraibi, Karim, 47279 Duisburg (DE)
(74) Representative: Eisenführ, Speiser & Partner

(57) **Abstract**

A method and apparatus for interacting with running software (25) have been described, wherein software tasks of different priorities can be scheduled and control information is input via a user interface (10) to a command line interpretation task (27) of a first priority. The input control information is translated by the command line interpretation task (27) into a memory address of a callback function task (26) of a second priority higher than the first priority, and the callback function task (26) is called by the command line interpretation task (27) by using the memory address.

## Description

### FIELD OF THE INVENTION

The present invention relates to a method, apparatus and computer program product for interacting with running software, such as real-time software of an embedded software system.

### BACKGROUND OF THE INVENTION

In order to ease implementation and debugging of real-time embedded software systems, software developer or users require a non-intrusive means of interacting with running software. This interaction should be bidirectional, meaning that the developer or user must be able to read values of various system parameters or change these system parameters on the fly during the operation of the real-time system, i.e. during the running software.

However, lack of ability to interact with running software makes it difficult for the developer to perform effective software debugging. Furthermore, lack of ability to read values of various system parameters makes it nearly impossible to diagnose an embedded software system. Moreover, lack of ability to modify system parameters of the running software requires re-compiling and re-loading the program every time a parameter modification is required. This dramatically increases the time required for implementation and testing of any new feature.

A conventional solution to the above problem is the use of unidirectional real-time tracing where a series of text messages and/or parameter values are captured in real-time out of the embedded system. Then, a post-analysis of the captured data is performed. However, this approach is disadvantageous in that a developer is not able to affect the software execution flow during run-time, and that usually large amount of captured data requires post-processing in order to extract the relevant information.

Another known approach for solving the above problem is the use of a step-by-step debugger. A debugger or debugging tool is a computer program that is used to test and debug other programs. The code to be examined might alternatively be running on an instruction set simulator (ISS), a technique that allows great power in its ability to hold when specific conditions are encountered but which will typically be somewhat slower than executing the code directly on the appropriate (or the same) processor. Some debuggers have the ability to modify the state of the program while this running, rather than merely to observe it. The step-by-step debugger provides the developer with the ability to pause the running program by means of setting one or more breakpoints within its source code. Once the program execution is paused, the developer is able to read and modify the contents of a random access memory (RAM) of the embedded system. However, such a debugging approach is intrusive due to the fact that pausing the execution of a real-time system will disrupt its real-time operation. Moreover, the debugging approach is to be seen as a short-term solution, since this capability is usually provided by an integrated development environment (IDE) which might not be delivered with the final production system.

### SUMMARY OF THE INVENTION

it is an object of the present invention to provide an interaction means which can be adapted to and deployed on an embedded software system.

This object is achieved by a method as claimed in claim 1, an apparatus as claimed in claim 10, and a computer program product as claimed in claim 15.

Accordingly, the proposed solution provides a software architecture of a simple yet flexible command-line interpreter (CLI) that can be easily deployed in most of the typical embedded software systems. It provides the software developer with capabilities necessary for interacting with a running real-time system. Control information can be input via the user interface to the command line interpretation task of lower priority, which may run in the background, and which translates the input control information into a memory address of a callback function task of higher priority. The background command line interpretation task is then able to call the callback function task by using the derived memory address.

Thereby, a simple application programming interface (API) can be provided which may only consist of three functions or functionalities. It can be ported to various embedded systems, whereas only two input-output functions need to be implemented for each port. A good scalability can be provided, since an increased number of supported commands to be interpreted by the command line interpretation task only marginally increases complexity of the system, due to the use of a lookup table for storing the commands. Moreover, the proposed interaction solution is non-intrusive due to its ability of running in the background as low-priority software task of the multi-tasking system.

The callback function task may be configured to read at least one parameter of the running software and to output the at least one parameter in human-readable form via the user interface. As an example, the human-readable form may be a character string.

As already mentioned above, the translation by the command line interpretation task may comprise reading a look-up table in which a pointer to the memory address of the callback function is stored.

Furthermore, the calling of the callback function may comprise passing at least one parameter contained in the input information to the callback function task. The input information and the at least one parameter may be a character or a character string.

Reading the input control information from the user interface may be achieved by calling a first platform-specific function by the command line interpretation task. Similarly, writing human-readable output information to the user interface may be achieved by calling a second platform-specific function by the command line interpretation task or by the callback function task.

Separation of different set of strings of said input or output information may be achieved by using a carriage return character or any other suitable character type.

The above features may be implemented as hardware circuits integrated on a single chip or chip set, or wired on a circuit board. As an alternative, at least parts of the features may be implemented as a software program or routine controlling a multi-tasking processor or computer device. As an example, the software program or routine may be implemented in C type programming language.

Other advantages, modifications are defined in the dependent claims.

### BRIEF DESCRIPTION OF THE DRAWINGS

The invention will now be described in greater detail based on embodiments with reference to the accompanying drawings in which:
Fig. 1 shows a schematic block diagram of an interaction system according to a first embodiment;
Fig. 2 shows a flow diagram of a procedure according to a second embodiment used for detecting valid user commands and calling an associated callback function;
Fig. 3 shows an exemplary software implementation of an application programming interface written in C programming language; and
Fig. 4 shows a schematic block diagram of a software-based implementation according to a third embodiment.

### DESCRIPTION OF THE EMBODIMENTS

In the following, embodiments of the present invention will be described based on an interaction system for interacting with a real-time embedded software system.

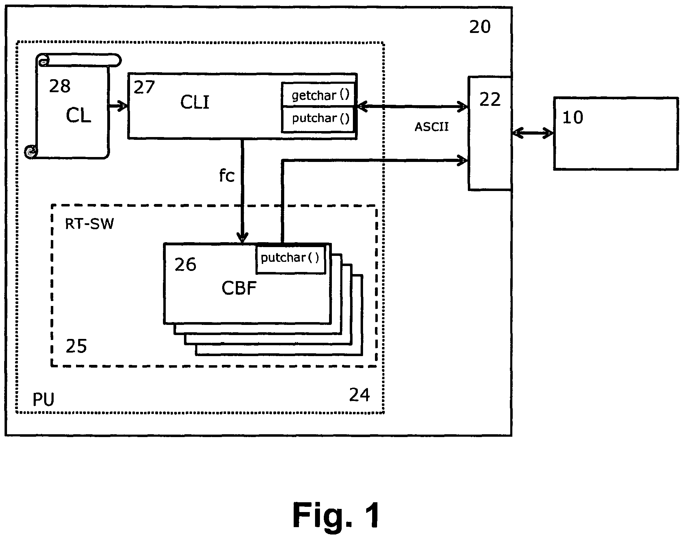

Fig. 1 shows a schematic block diagram of an overall system overview. The embedded system 20 consists of at least one processing unit (PU) 24 and a hardware interface 22, such as a Joint Test Action Group (JTAG), Universal Asynchronous Receiver/Transmitter (UART) or Ethernet interface, for communication with the outside world. The software developer or user is provided with a terminal 10 that is connecting to the hardware interface 22. The terminal 10 allows the user or developer to read or write information from or towards the embedded system 20. The information or control information read form or written to the terminal may be a series of ASCII (American Standard Code for Information Interchange) codes that are interpreted by the terminal 22 as human-readable text characters or character strings.

The processing unit 24 of the embedded system 20 is configured to support multi-tasking by running an operating system that schedules software tasks of different priorities or by consisting of two of more processing cores that are able to execute the software tasks of different priorities in parallel. In order not to interfere with the real-time operation of the embedded system 20, a command line interpreter (CLI) or command line interpretation task 27 is provided, which runs on a software task with low or even lowest priority. The rest of the software including the real-time software (RT-SW) 25 is adapted to run on higher priority tasks.

The CLI 27 has access to a look-up table 28 or a memory having a look-up table configuration, which contains a command list (CL) of character strings (e.g. ASCII strings) representing valid user commands. The look-up table 28 associates each of the commands with a pointer to a memory address of a callback function (CBF) or callback function task 26 of the real-time software 25, that is called by the CLI 27 using a function call (fc) in the event of a reception of a corresponding command after the latter is entered by the user via the user interface 22. This look-up table 28 may be initialized at system start-up.

The software module or task of the CLI 27 is able to read character strings from the hardware interface by calling a platform-specific function, e.g. the *getchar( )* function. Furthermore, the CLI 27 as well as the callback functions 26 are able to provide character strings to the hardware interface 22 by calling another platform-specific function, e.g. the *putchar( )* function. These platform-specific functions need to be re-implemented every time the software module of the CLI 27 is ported to a new hardware platform.

The callback functions 26 may be implemented by the software developer or user. The CLI 27 passes one or more parameters to the associated callback function 26, wherein these parameters may be contained in the input information and may have the form of character strings. While entering a command, the user may append these parameters to the command's character string (e.g. ASCII string).

Among others, the callback function 26 may be adapted to provide information about the real-time software 25 by reading various parameters of the real-time software 25 and displaying their values in a human-readable form by sending the corresponding character string to the terminal 22 through consecutive calls of the respective platform-specific function (e.g. the *putchar( )* function). Additionally, the callback function 26 may be adapted to convert the character strings received through the hardware interface 22 by calling the respective platform-specific function (e.g. the *getchar( )* function) into valid numerical values and use these values to modify various parameters of the real-time software 25. The character strings may have been passed as parameters to the callback function 26.

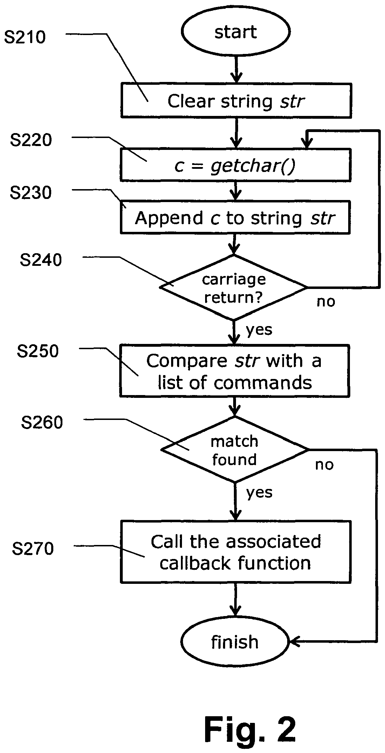

Fig. 2 shows a flow diagram which indicates a procedure used by the CLI 27 to detect valid user commands and call the associated callback function(s) 26.

In step S210, the CLI 27 clears the contents an array of characters *str.* Then, in step S220, it captures character sting c from the terminal 10 by reading it from the hardware interface 22 using the *getchar( )* function. Then, in step S230, the received characters are appended to the string *str* until a carriage return character (or other specific predefined character) is entered by the user. Detection of this specific character is performed in step S240. If it is determined in step S240 that the specific character has been received, the procedure continues with step S250 and the string *str* is compared with a set of strings stored in the look-up table 28. If no carriage return character has been received, the procedure jumps back to step S220 and captures the next character c from the terminal 10.

In the next step S260 it is checked whether a match between one of the commands of the look-up table 28 and the stored string *str* has been found. If not, the procedure ends. Otherwise, if a match with one of the commands in the look-up table 28 has been found in step S260, the procedure proceeds to step S270 and the CLI 27 retrieves the memory address of the associated callback function and issues a function call to call it. It is noted that the procedure of Fig. 2 is repeated in an infinite loop as long as the CLI 27 is active.

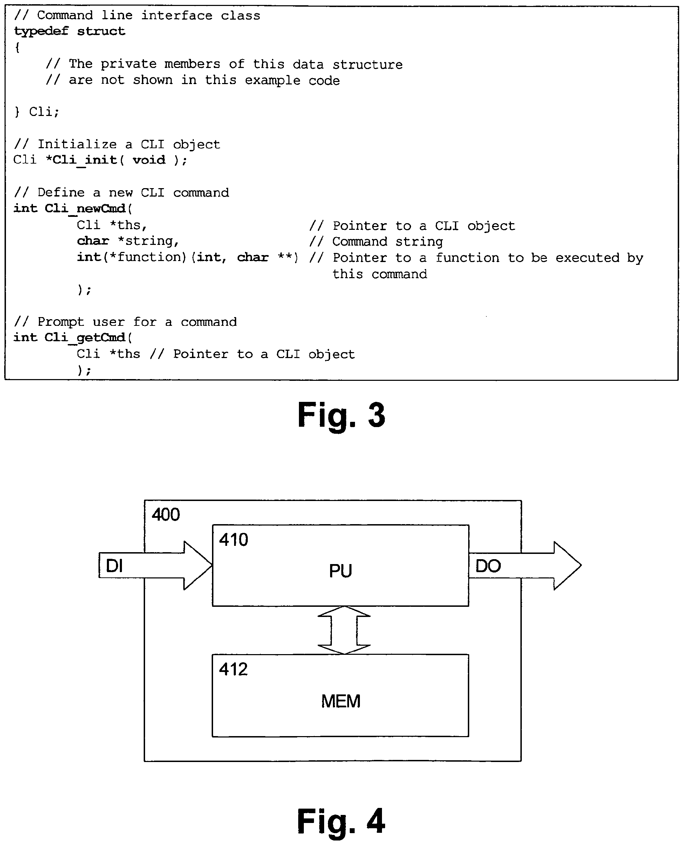

Fig. 3 shows an example of a software implementation of an API written in C programming language of the American National Standards Institute (ANSI). According to this implementation, the API initially defines a class named *CLi* and methods *Cli_init( ), Cli_newCmd( )* and *Cli_getCmd( ),* wherein *Cli_init( )* is a constructor method with initializes and returns an object of type *Cli.* Furthermore, *Cli_newCmd( )* adds a new command to the look-up table 28, it takes the command string and a callback function pointer as arguments. This method is called once for every valid command during the system startup phase.

Furthermore, *Cli_getCmd( )* implements the functionality described by the flowchart of Fig. 2 and must be repeatedly called in an infinite loop by a calling software thread for as long as the CLI 27 needs to stay active. This method also calls the *getchar( )* and *putchar( )* functions as well as the callback functions 26 of the received commands.

Fig. 4 shows a schematic block diagram of an alternative software-based implementation according to a third embodiment. The required functionalities can be implemented in a computer device 400 with a processing unit 410, which may be any processor or computer device supporting multi-tasking with a control unit which performs control based on software routines of a control program stored in a memory 412. The control program may also be stored separately on a computer-readable medium. Program code instructions are fetch from the memory 412 and are loaded to the control unit of the processing unit 410 in order to perform the processing steps of Fig. 2 and other processing steps described in connection with Fig. 1, which may be implemented as the above mentioned software routines. It is noted that, as mentioned above, the processing unit 410 may comprise two or more processing cores that are able to execute software tasks in parallel. The processing steps may be performed on the basis of input data DI and may generate output data DO. In the present interaction system, the input data DI may correspond to characters or character strings input via the hardware interface 22, and the output data DO may correspond to human-readable output information obtained by the callback functions 26 in response to the input user commands.

Consequently, the functionalities of the above embodiments may be implemented as a computer program product comprising code means for generating each individual step of the interaction procedure when run on a multi-tasking computer device or data processor.

In summary, a method and apparatus for interacting with running software have been described, wherein software tasks of different priorities can be scheduled and control information can be input via a user interface to a command line interpretation task of a first priority. The input control information is translated by the command line interpretation task into a memory address of a callback function task of a second priority higher than the first priority, and the callback function task is called by the command line interpretation task by using the memory address.

It is apparent that the invention can easily be extended to any software environment which may include a collection of hardware and software technologies where some or all of the operating functions are implemented through modifiable software or firmware operating on programmable processing technologies. Such devices include field programmable gate arrays (FPGAs), digital signal processors (DSPs), general purpose processors (GPPs), programmable System on Chip (SoC) or other application specific programmable processors. The use of these technologies allows new wireless features and capabilities to be added to existing radio systems without requiring new hardware. Moreover, any kind of module of various programming languages with predetermined interface definition, not necessarily a module of a wireless communication system, can be port controlled by the proposed interaction solution. The embodiments may thus variable in the scope of the attached claims.

## Claims

1. A method for interacting with running software (25), said method comprising:
a) scheduling software tasks of different priorities;
b) inputting control information via a user interface (22) to a command line interpretation task (27) of a first priority;
c) translating said input control information by said command line interpretation task (27) into a memory address of a callback function task (26) of a second priority higher than said first priority, said callback function (26) task providing information about said running software (25); and
d) calling said callback function task (26) by said command line interpretation task (27) by using said memory address.

2. The method according to claim 1, further comprising reading at least one parameter of said running software (25) by said callback function task (26) and outputting the at least one parameter in human-readable form via said user interface (22).

3. The method according to claim 1 or 2, wherein said human-readable form is a character or a character string.

4. The method according to any one of the preceding claims, wherein said translating comprises reading a look-up table (28) in which a pointer to said memory address is stored.

5. The method according to any one of the preceding claims, wherein said calling comprises passing at least one parameter contained in said input information to said callback function task (26).

6. The method according to any one of the preceding claims, wherein said input function and said at least one parameter are characters or character strings.

7. The method according to any one of the preceding claims, further comprising calling a first platform-specific function by said command line interpretation task (27) to read said input control information from said user interface (22).

8. The method according to any one of the preceding claims, further comprising calling a second platform-specific function by said command line interpretation task (27) or by said callback function task (26) to write human-readable output information to said user interface (22).

9. The method according to any one of the preceding claims, further comprising using a predefined specific character in said control information to separate different sets of character strings.

10. An apparatus for providing an interaction with a running software (25), said apparatus comprising:
a) a processor unit (24) capable of scheduling software tasks of different priorities; and
b) a user interface (22) for inputting control information;
c) wherein said processing unit (24) is adapted to provide a command line interpretation task (27) of a first priority for translating said input control information into a memory address of a callback function task (26) and for calling said callback function task (26) by using said memory address, said callback function task (26) providing information about said running software (25); and
d) wherein said processing unit (24) is adapted to schedule said callback function (26) at a second priority higher than said first priority.

11. The apparatus according to claim 10, further comprising a look-up table memory (28) for storing pointers to memory addresses of a plurality of callback function tasks (26).

12. The apparatus according to claim 10 or 11, wherein said command line interpretation task (27) is adapted to call a first platform specific function in order to read said input control information from said user interface (22).

13. The apparatus according to anyone of claims 10 to 12, wherein said command line interpretation task (27) and said callback function task (26) are adapted to call a second platform-specific function in order to write human-readable output information to said user interface (22).

14. A terminal device adapted to communicate with an apparatus according to any one of claims 10 to 13 via said user interface (22).

15. A computer program product comprising code means for running the steps of any one of claims 1 to 9 when run on a multi-tasking computer system.
